# EUROPEAN PATENT APPLICATION

(11) **EP 3 048 576 A1**
(43) Date of publication of application: **27.07.2016**
(21) Application number: 14846102.3
(22) Date of filing: 15.07.2014
(51) Int. Cl.: G06Q 50/10, G06F 13/00, G06Q 30/02

(54) **INFORMATION PROCESSING DEVICE**

(30) Priority: 20.09.2013 JP 2013195191
(71) Applicant: Sony Corporation, Tokyo 108-0075 (JP)
(72) Inventor: YOSHIDA, Yusuke, Tokyo 108-0075 (JP); MAEDA, Kunitoshi, Tokyo 108-0075 (JP); NAITO, Tomohiro, Tokyo 108-0075 (JP); YODA, Yasunori, Tokyo 108-0075 (JP)
(74) Representative: MFG Patentanwälte Meyer-Wildhagen Meggle-Freund Gerhard PartG mbB
(86) International application number: PCT/JP2014/068837
(87) International publication number: WO 2015/040944

(57) **Abstract**

Provided is an information processing apparatus including: a counting unit configured to count the number of users who are interested in a product dealt in e-commerce transaction performed via a network; and a control unit configured to perform control in a manner that a counting result by the counting unit is presented on a screen of the e-commerce transaction along with information of the product.

## Description

### Technical Field

The present disclosure relates to an information processing apparatus.

### Background Art

In recent years, e-commerce in which products are sold and bought through the Internet is widespread. A user can perform procedure for purchasing a product by accessing the Internet through a personal computer (PC), a tablet terminal, a smartphone, a mobile phone, or the like.

Here, for example, on a transaction screen of a Web store which sells electronic books, purchase history, credit card information, display history (history of browsed electronic books), a keep list (electronic books which are desired to be bought and flagged), or the like, of a user are presented as account information of the registered user along with information of products. The user can confirm his/her purchase history, display history, keep list, or the like, on the transaction screen of the Web store.

### Summary of Invention

### Technical Problem

However, on the e-commerce transaction screen of the related art, while the user can browse his/her purchase history, display history, or the like, the user cannot perform communication such as sharing of assessment of a product with other users.

Further, on the e-commerce transaction screen of the related art, while the user can know a review for the product written by other users and an average value of assessment provided by a number of other users, the user cannot specifically know the number of users who are interested in the product. Further, the user cannot perform communication while sharing the number of users who are interested in the product with other users.

Accordingly, the present disclosure provides an information processing apparatus which can present the number of users who are interested in a product on an e-commerce transaction screen.

### Solution to Problem

According to the present disclosure, there is provided an information processing apparatus including: a counting unit configured to count the number of users who are interested in a product dealt in e-commerce transaction performed via a network; and a control unit configured to perform control in a manner that a counting result by the counting unit is presented on a screen of the e-commerce transaction along with information of the product.

### Advantageous Effects of Invention

According to the present disclosure as described above, it is possible to present the number of users who are interested in a product on an e-commerce transaction screen.

Note that the effects described above are not necessarily limited, and along with or instead of the effects, any effect that is desired to be introduced in the present specification or other effects that can be expected from the present specification may be exhibited.

### Brief Description of Drawings

[FIG. 1] FIG. 1 is a diagram for explaining outline of an information processing system according to one embodiment of the present disclosure.
[FIG. 2] FIG. 2 is a block diagram illustrating one example of main components of a user terminal according to the embodiment.
[FIG. 3] FIG. 3 is a block diagram illustrating one example of main components of a server according to the embodiment.
[FIG. 4] FIG. 4 is a diagram illustrating one example of product information stored in a product information DB according to the embodiment.
[FIG. 5] FIG. 5 is a flowchart illustrating counting processing in the information processing system according to the embodiment.
[FIG. 6] FIG. 6 is a diagram illustrating an example of a display screen which displays account information of a user and a communication function in a Web store of electronic books.
[FIG. 7] FIG. 7 is a diagram illustrating an example of display of a "have read"/"wish to read" button according to the embodiment.
[FIG. 8] FIG. 8 is a diagram illustrating one example of a counting result display screen according to the embodiment.
[FIG. 9] FIG. 9 is a diagram illustrating an example of a screen displayed by scrolling the screen illustrated in FIG. 8.
[FIG. 10] FIG. 10 is a diagram illustrating an example of a screen which displays a counting result of users who depress the "wish to read" button according to the embodiment.
[FIG. 11] FIG. 11 is a diagram for explaining setting of a genre of electronic books to be searched.
[FIG. 12] FIG. 12 is a diagram for explaining setting of conditions for search refinement according to the embodiment.
[FIG. 13] FIG. 13 is a diagram illustrating one example of a search result screen according to the embodiment.
[FIG. 14] FIG. 14 is a diagram for explaining a predictive search result according to the embodiment.
[FIG. 15] FIG. 15 is a diagram for explaining a case where tag search is performed from the predictive search result according to the embodiment.
[FIG. 16] FIG. 16 is a diagram illustrating one example of a tag search screen according to the embodiment.

### Description of Embodiments

Hereinafter, (a) preferred embodiment(s) of the present disclosure will be described in detail with reference to the appended drawings. In this specification and the drawings, elements that have substantially the same function and structure are denoted with the same reference signs, and repeated explanation is omitted.

Further, the description will be provided in the following order.
1. Outline of Information Processing System According to One Embodiment of the Present Disclosure
2. Basic Configuration and Operation Processing
   2-1. Configuration
   2-2. Operation Processing
3. Display Screen Example
   3-1. Screen Display Example Relating to Communication Information
   3-2. Screen Display Example Relating to Search
4. Conclusion

### «1. Outline of Information Processing System According to One Embodiment of the Present Disclosure»

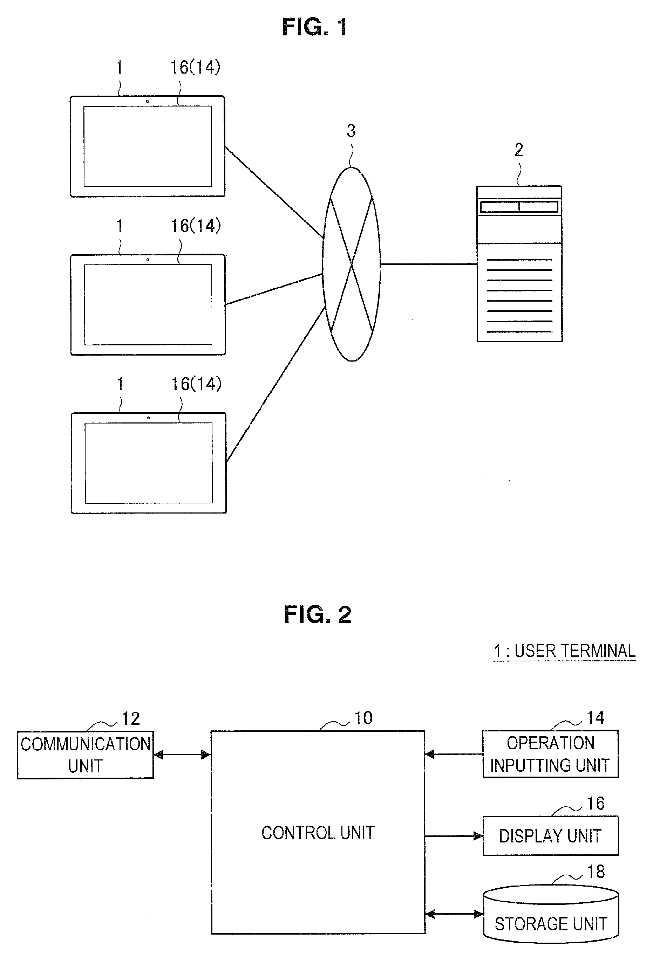

First, outline of an information processing system according to one embodiment of the present disclosure will be described with reference to FIG. 1. As illustrated in FIG. 1, the information processing system according to the present embodiment is configured with a plurality of user terminals 1 and a server 2, and the plurality of user terminals 1 are connected to the server 2 via a network 3.

The user terminal 1 is, for example, implemented with a tablet terminal on which a display unit 16 is provided all over. It should be noted that the user terminal 1 according to the present embodiment is not limited to the tablet terminal illustrated in FIG. 1, and, for example, may be implemented with a mobile phone terminal, a smartphone, a personal computer (PC), a head-mounted or eye-glass type head mounted display (HMD), or the like.

Further, a touch sensor which is one example of an operation inputting unit 14 is provided at the display unit 16, so that a user can input operation by directly touching a display screen. At the display unit 16 according to the present embodiment, a transaction screen of a Web store is displayed based on information acquired from the server 2, and the user can input operation by directly touching the transaction screen to perform procedure for purchasing a product.

The server 2 is a Web server which executes e-commerce service through the Internet. The server 2 outputs the e-commerce transaction screen of the Web store in response to a request from the user terminal 1, and executes e-commerce transaction based on information inputted by the user to the transaction screen.

The present disclosure particularly relates to content presented on an e-commerce transaction screen displayed at each user terminal 1 in the information processing system having the above-described configuration. Specifically, the information processing system according to the present disclosure presents communication information to be shared with other users along with information of a product. Examples of the communication information include, for example, information such as the number of users who are interested in the product (the number of people who wish to purchase the product, the number of people who experienced the product).

The outline of the information processing system according to one embodiment of the present disclosure has been described above. Subsequently, basic configurations of the user terminal 1 and the server 2 included in the information processing system according to the present disclosure, and operation processing of the information processing system will be sequentially described.

### «2. Basic Configuration and Operation Processing»

### <2-1. Configuration of User Terminal 1>

FIG. 2 is a block diagram illustrating one example of main components of the user terminal 1 according to the present embodiment. As illustrated in FIG. 2, the user terminal 1 has a control unit 10, a communication unit 12, an operation inputting unit 14, a display unit 16 and a storage unit 18.

The control unit 10 which is configured with, for example, a microcomputer provided with a central processing unit (CPU), a read only memory (ROM), a random access memory (RAM), a non-volatile memory and an interface unit, controls each component of the user terminal 1.

Specifically, for example, the control unit 10 performs control so that an e-commerce transaction screen is displayed on the display unit 16 based on information received from the server 2 by the communication unit 12. Further, the control unit 10 controls the communication unit 12 to transmit information inputted by the user to the e-commerce transaction screen displayed on the display unit 16 to the server 2.

The communication unit 12 has a function of transmitting and receiving data by being connected to an external apparatus in a wired/wireless manner. The communication unit 12 according to the present embodiment is connected to the network 3 and transmits and receives data to and from the server 2 which provides e-commerce service on the network.

The operation inputting unit 14 accepts input by the user and outputs the accepted input information to the control unit 10. The operation inputting unit 14 is implemented with a touch sensor which accepts input of operation to the display screen as well as a button, a switch, or the like.

The display unit 16 displays a predetermined display screen according to control by the control unit 10. The display unit 16 according to the present embodiment displays, for example, an e-commerce transaction screen. Further, the display unit 16 is implemented with, for example, a liquid crystal display (LCD), an organic light-emitting diode (OLED), or the like.

The storage unit 18 stores a program, or the like, used by the control unit 10 to execute various kinds of processing.

The details of the configuration of the user terminal 1 according to the present embodiment have been described above. It should be noted that the configuration illustrated in FIG. 2 is one example of the main components of the user terminal 1, and the configuration of the user terminal 1 according to the present embodiment is not limited to this. For example, the user terminal 1 may further have a microphone (sound collecting unit) so as to realize input of operation using user's speech. Further, the user terminal 1 may further have a camera (image pickup unit) so as to realize input of operation using user's gesture.

### <2-2. Configuration of Server 2>

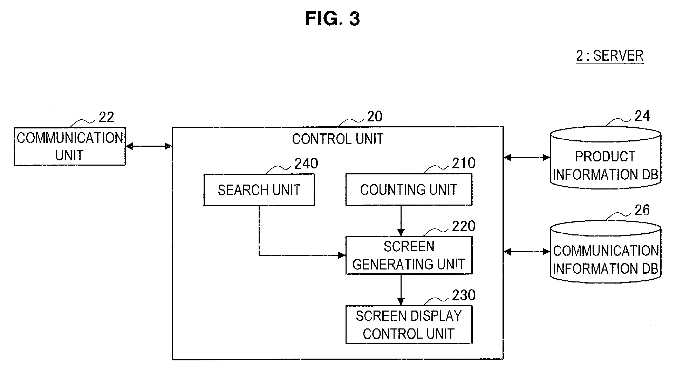

Subsequently, a configuration of the server 2 included in the information system according to the present embodiment will be described with reference to FIG. 3. FIG. 3 is a block diagram illustrating one example of main components of the server 2 according to the present embodiment. As illustrated in FIG. 3, the server 2 has a control unit 20, a communication unit 22, a product information DB 24 and a communication information DB 26.

The control unit 20 which is configured with, for example, a microcomputer provided with a CPU, a ROM, a RAM, a non-volatile memory and an interface unit, controls each component of the server 2.

Specifically, for example, the control unit 20 controls the communication unit 22 to transmit information for displaying the e-commerce transaction screen to the user terminal 1 via the network 3. Further, the control unit 20 performs control so that information inputted by the user to the e-commerce transaction screen at the user terminal 1 is received from the user terminal 1 and e-commerce transaction is executed based on the received input information.

Further, the control unit 20 according to the present embodiment can provide user's assessment, or the like, of each product which is a target of e-commerce transaction as communication information which is to be shared among a plurality of users. Specifically, the control unit 20 counts the number of users who are interested in each product (for example, the number of people who wish to purchase the product or the number of people who experienced the product) and presents the counting result on the e-commerce transaction screen as communication information along with information of the product.

Such provision of the communication information is realized by the control unit 20 functioning as a counting unit 210, a screen generating unit 220 and a screen display control unit 230. Further, as illustrated in FIG. 3, the control unit 20 according to the present embodiment also functions as a search unit 240 which searches a product desired by the user from the product information DB 24. Each function of the control unit 20 will be described below.

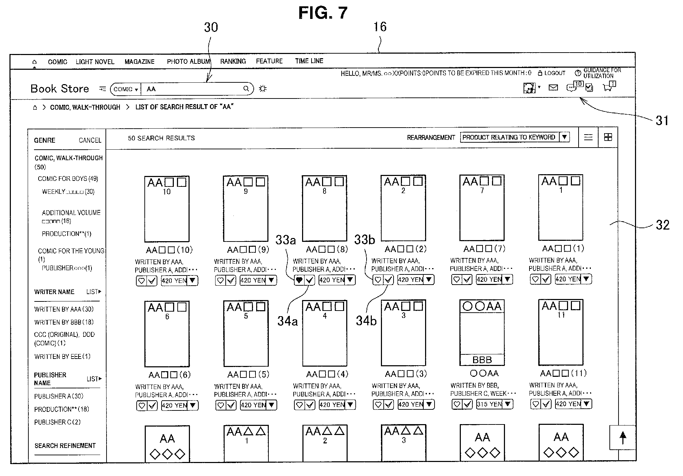

The counting unit 210 counts the number of users who are interested in a product which is a target of e-commerce transaction. Specifically, for example, the counting unit 210 counts at least one of the number of users who desire the product and the number of users who experienced the product. As the counting method, for example, on the e-commerce transaction screen, when a user depresses a "wish" button/"experience" button displayed along with information of the product, the counting unit 210 counts the user as a user who desires to purchase the product or a user who experienced the product. The counting result is stored in the communication information DB 26 in association with each product. A display example of the "wish" button/"experience" button will be described later with reference to FIG. 7. It should be noted that because in the example illustrated in FIG. 7, the e-commerce transaction screen dealing with electronic books as products is used, the "wish" button/"experience" button are referred to as "wish to read" button/"have read" button.

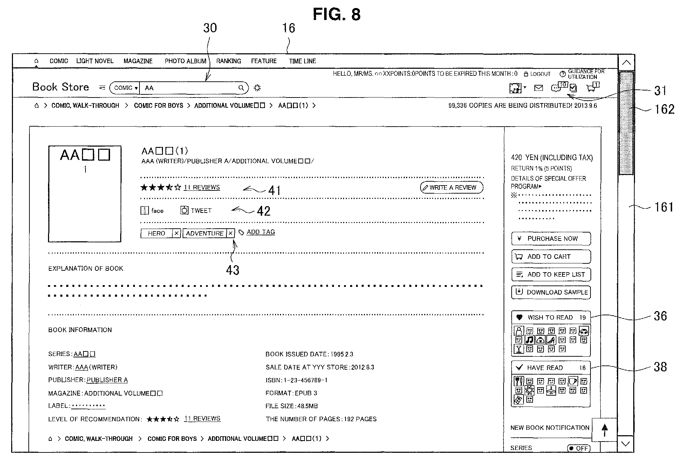

The screen generating unit 220 generates the e-commerce transaction screen to be displayed at the display unit 16 of the user terminal 1. Further, the screen generating unit 220 can generate the e-commerce transaction screen including the counting result by the counting unit 210. A display example of the e-commerce transaction screen including the counting result will be described later with reference to FIG. 8 to FIG. 10.

Further, the screen generating unit 220 can also generate the e-commerce transaction screen based on a search result by the search unit 240.

The screen display control unit 230 generates information for causing the e-commerce transaction screen generated by the screen generating unit 220 to be displayed at the display unit 16 of the user terminal 1, and controls the communication unit 22 to transmit the generated information to the user terminal 1, so that the e-commerce transaction screen is displayed at the display unit 16 of the user terminal 1.

The search unit 240 searches a product from the product information DB 24 according to search conditions (such as keyword and a genre) designated by the user and outputs the search result to the screen generating unit 220. A specific search method by the search unit 240 will be described later with reference to FIG. 1 to FIG. 16. Further, the search unit 240 according to the present embodiment can also perform predictive search based on a keyword inputted by the user.

The communication unit 22 is connected to the network 3 and transmits and receives data while being connected to each user terminal 1.

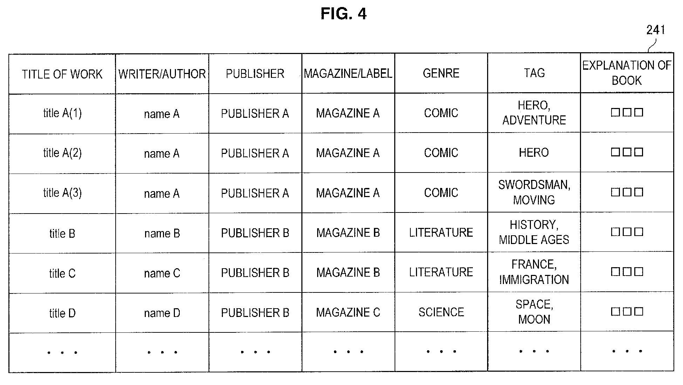

The product information DB 24 stores information relating to products which are targets of e-commerce transaction. Here, one example of the product information stored in the product information DB 24 is illustrated in FIG. 4. FIG. 4 is a diagram illustrating one example of product information 241 stored in the product information DB 24. As illustrated in FIG. 4, the product information 241 includes items such as a title of a work, a writer/author, a publisher, magazine/label which carries the work, a genre, a tag and explanation of the book.

The communication information DB 26 stores communication information such as assessment of the product, or the like, to be shared among a plurality of users. Specifically, for example, the number of users who are interested in the product, counted by the counting unit 210 is stored in the communication information DB 26.

### <2-3. Operation Processing>

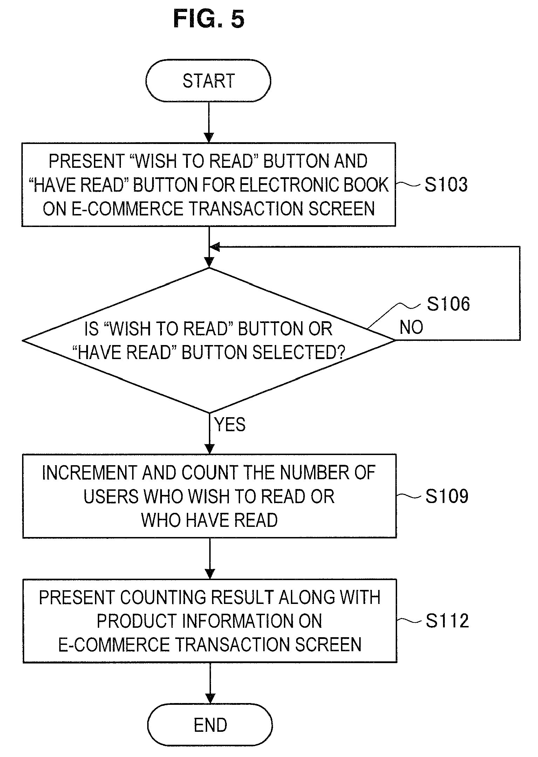

Subsequently, operation processing of the information processing system according to the present embodiment will be described with reference to FIG. 5. FIG. 5 is a flowchart illustrating counting processing in the information processing system according to the present embodiment. Here, counting processing of the number of users who are interested in an electronic book which is a target product of e-commerce transaction, for example, the number of users who "wish to read/have read" the electronic book, will be specifically described using an example of e-commerce transaction of an electronic book as one example of the e-commerce transaction.

As illustrated in FIG. 5, first, in step S103, the server 2 causes a "wish to read" button and a "have read" button for indicating interest in the electronic book to be presented on the e-commerce transaction screen displayed at the display unit 16 of the user terminal 1.

Subsequently, in step S106, the server 2 determines whether or not the "wish to read" button or the "have read" button is selected (clicked/tapped) by the user.

Subsequently, when it is determined that the "wish to read" button or the "have read" button is selected by the user (S106/Yes), the counting unit 210 of the server 2 increments and counts the number of users in step S109. Specifically, the counting unit 210 increments the "number of users who wish to read" the electronic book (the number of people who wish to purchase the product) when the "wish to read" button is selected, and increments the "number of users who have read" the electronic book (the number of people who experienced the product) when the "have read" button is selected.

Subsequently, in step S112, the server 2 causes the counting result to be presented along with information of the product on the e-commerce transaction screen displayed at the display unit 16 of the user terminal 1. By this means, the user can recognize the number of users who wish to read the target electronic book and the number of users who have actually read the target electronic book in real time and can share assessment of the electronic book with other users.

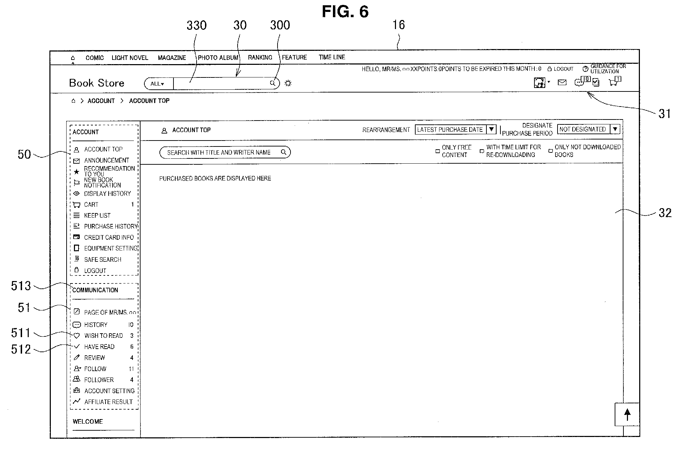

The basic configuration of the information processing system and the counting operation processing according to the present embodiment have been described above. Subsequently, a display example of the e-commerce transaction screen displayed at the display unit 16 of the user terminal 1 according to the present embodiment will be specifically described with reference to FIG. 6 to FIG. 16. It should be noted that a case will be described here also using an example of the e-commerce transaction of electronic books as one example of e-commerce transaction, where the e-commerce transaction screen of the Web store of electronic books is displayed at the display unit 16.

### «3. Display Screen Example»

On the e-commerce transaction screen according to the present embodiment, the above-described communication information (such as the number of users who wish to read the electronic book and the number of users who have read the electronic book) to be shared with other users is presented along with information of the electronic book. An example of screen display relating to the communication information will be specifically described below.

### <3-1. Screen Display Example Relating to Communication Information>

### (3-1-1. List Display Screen)

FIG. 6 is a diagram illustrating an example of a display screen displaying account information of the user and the communication function in the Web store of electronic books. As illustrated in FIG. 6, in the left part of the Web store screen displayed at the display unit 16, a display region 50 for account information and a display region 51 for communication information are placed. In the display region 50 for account information, menu items such as "announcement", "display history" "keep list", "purchase history" and "credit card information", which are also dealt in the normal Web store of electronic books are displayed.

Meanwhile, in the display region 51 for communication information, menu items of various kinds of communication information to be shared with other users, such as "history", "wish to read", "have read", "review", "follow" and "follower" are displayed. Numerical values indicated in association with each menu item are the number of users who input information or who set a flag, or the like.

Here, the "history" is a function for browsing history of comments inputted by the user for the electronic book. The comments inputted by the user can be shared with other users.

Further, "wish to read" and "have read" are functions for browsing a list of electronic books for which the user sets a flag of "wish to read"/"have read" to the electronic book. For example, when the item of "wish to read" 511 is selected, a list of three electronic books for which the user sets a flag of "wish to read" is displayed in a display region 32. Further, when the item of "have read" 512 is selected, a list of six electronic books for which the user sets a flag of "have read" is displayed in the display region 32. It should be noted that the flags of "wish to read"/"have read" set by the user are counted by the server 2 as the number of users who "wish to read"/"have read" the electronic book, and each counting result is shared with other users by being presented along with information of each electronic book.

Further, "follow" is a function for enabling the user to register other users the user is curious about. Further, "follower" is a function for enabling the user to be followed by other users. The user can also confirm information of other users who have "follow"/"follower" relationship.

Further, in the upper right part of the screen illustrated in FIG. 6, an icon group 31 of various kinds of menu (such as an announcement function, a comment history function and a function for conforming products put into a cart) is placed.

Further, in the upper left part of the screen illustrated in FIG. 6, a search bar 30 for searching an electronic book is placed. The search bar 30 includes a keyword entry field 330 and a search button 300. The user can issue an instruction of starting search by inputting a keyword relating to an electronic book to be searched in the keyword entry field 330 and selecting the search button 300. Further, the search result (list of searched electronic books) is displayed in the display region 32.

The basic screen content of the Web store screen of electronic books have been described above. It should be noted that arrangement of the above-described display components is not limited to the example illustrated in FIG. 6.

### (3-1-2. Display Screen of "Have Read"/"Wish to Read" Button)

Subsequently, a display example of the "have read"/"wish to read" button for indicating interest in the electronic book will be described with reference to FIG. 7. FIG. 7 is a diagram illustrating a display example of the "have read"/"wish to read" button according to the present embodiment.

In the example illustrated in FIG. 7, the search result obtained through search according to conditions of a search keyword of "AA" and a genre of the work of "comic, walk-through" is displayed in the display region 32.

As illustrated in FIG. 7, in the display region 32, a title of a work, writer/author name, a publisher, or the like, price, the "wish to read" button 33 (33a, 33b) and the "have read" button 34 (34a, 34b) are placed under an image of a cover of each electronic book. The "wish to read" button 33 is a button depressed when the user is interested in the electronic book and sets a flag as the electronic book which he/she wishes to read. Further, the "have read" button 34 is a button depressed when the user sets a flag as the electronic book which have been actually read.

The user can set a flag of "wish to read"/"have read" to the target electronic book by depressing the "wish to read" button 33 or the "have read" button 34 and can accumulate information. Specifically, when the control unit 10 of the user terminal 1 detects from the operation inputting unit 14 that the "wish to read" button 33 or the "have read" button 34 is depressed, the control unit 10 transmits the depression to the server 2 as input information. The server 2 sets a flag of "wish to read"/"have read" to the target electronic book based on the input information transmitted from the user terminal 1 and accumulates the information in the communication information DB 26.

It should be noted that it is also possible to distinguish between a button which has been depressed and a button which has not been depressed yet by color. In the example illustrated in FIG. 7, the "wish to read" button 33b/the "have read" button 34b which have not been depressed yet are gray-out displayed, while the "wish to read" button 33a/the "have read" button 34a which have been depressed are color displayed.

As described above, in the present embodiment, it is possible to display a button ("wish to read" button 33/"have read" button 34) for indicating that the user is interested in the electronic book on a Web store screen (e-commerce transaction screen) of electronic books, and collect flag information of "wish to read"/"have read" of each user.

### (3-1-3. Display screen of Counting Result of the Number of Users Who Depress "Wish to Read"/"Have Read" Button)

Subsequently, a display example of a counting result of the number of users who depress the above-described "wish to read" button 33/"have read" button 34 will be described with reference to FIG. 8. FIG. 8 is a diagram illustrating one example of the counting result display screen according to the present embodiment.

The number of users who depress the "wish to read" button 33/"have read" button 34 is counted at the counting unit 210 of the server 2, and a screen which reflects the counting result is generated by the screen generating unit 220. Information for displaying the screen generated by the screen generating unit 220 is transmitted from the communication unit 22 to the user terminal 1 by the screen display control unit 230. The control unit 10 of the user terminal 1 performs control so that the screen which reflects the counting result is displayed at the display unit 16 based on the received information.

The screen illustrated in FIG. 8 is, for example, a screen to which the screen transits when any one electronic book is selected among the search result of electronic books illustrated in FIG. 7, and detail information of the selected electronic book is presented.

The detail information includes a title of the electronic book, the number of people who write a review of the electronic book and link 41 to a review page, link 42 for coordination with other social service, tag display 43 set for the electronic book, explanation of the book, book information, or the like.

The review is information which is arbitrarily inputted by each user and shared with other users.

Further, coordination with other social service is a function for, for example, posting an URL of the page to other social service.

Further, the tag set to the electronic book is information which is arbitrarily set by each user and to be shared with other users. In the example illustrated in FIG. 8, tags of "hero" and "adventure" are set to the electronic book, and the user can add a new tag or delete the set tags.

Further, in the right part of the screen illustrated in FIG. 8, user information 36 (counting result) of users who depress the "wish to read" button, user information 36 (counting result) of users who depress the "have read" button are displayed. For the user information 36 of the users who depress the "wish to read" button, the number of users "19" who depress the "wish to read" button 33 (see FIG. 7), and icons of the users who depress the button are displayed. For the user information 38 of users who depress the "have read" button, the number of users "16" who depress the "have read" button 34 (see FIG. 7), and icons of the users who depress the button are displayed. Such information is information to be shared with other users, and each user can intuitively recognize the number of users who wish to read the target electronic book or the number of users who have read the target electronic book and the users who wish to read the target electronic book or the users who have read the target electronic book.

### (3-1-4. Display of Fixed Header and New Book Notification Function)

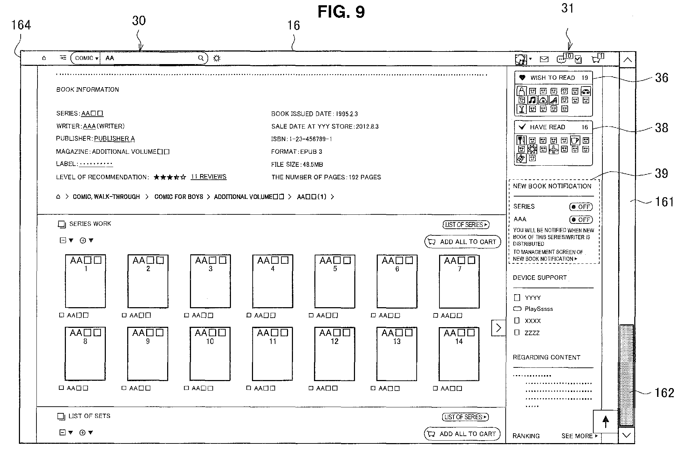

FIG. 9 is a diagram illustrating a screen example displayed by scrolling the screen illustrated in FIG. 8. Specifically, by selecting and moving a knob 162, which is a knob-type operating unit on the scroll bar 161 illustrated in FIG. 8, downward, the screen transits to a lower part of the screen which is not displayed at the display unit 16 in FIG. 8.

At this time, the search bar 30 located in the upper part of the screen is not displayed in accordance with downward transition of the display screen. However, in the present embodiment, when the search bar 30 is not displayed, as illustrated in FIG. 9, it is possible to perform control so that a fixed header 164 including the search bar 30 is displayed and the fixed header 164 moves with the screen even if the screen is scrolled. By this means, even if the display screen is scrolled in any direction of right, left, upward and downward directions, when the search bar 30 deviates from the display screen, it is possible to realize a UI in which the fixed header 164 including the search bar 30 moves with the screen. By this means, the user can input a new keyword to the search bar 30 of the fixed header 164 and perform search again any time.

It should be noted that, as illustrated in FIG. 9, the fixed header 164 may further include an icon group 31 of various kinds of menu (such as an announcement function, a comment history function and a function for confirming a product put into a cart).

Further, in the right part of the screen illustrated in FIG. 9, a new book notification setting field 39 is displayed. In the new book notification setting screen 39, when the electronic book is one of a series of books, it is possible to turn ON/OFF setting of notification when a new book in the series is distributed. Further, it is possible to turn ON/OFF setting of notification when a new book of an author of the electronic book (in the example illustrated in FIG. 9, indicated with "AAA" as an example of the author name) is distributed.

### (3-1-5. List Display of Counting Result of Depression of "Wish to Read"/"Have Read" button)

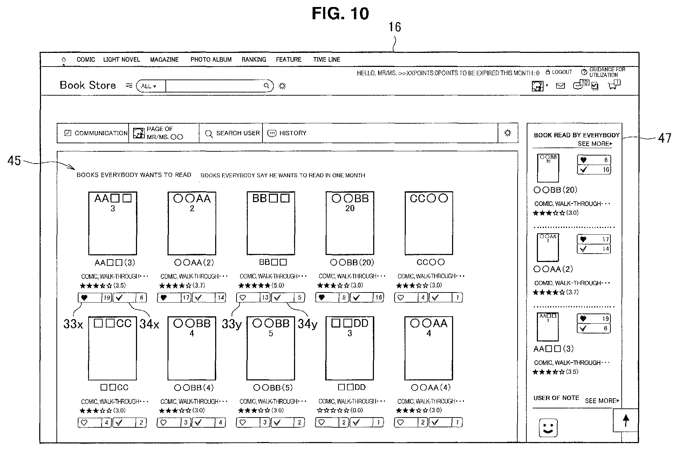

In the above-described example illustrated in FIG. 8, while an example has been described where the number of users and icons of the users who depress the "wish to read"/"have read" button for the selected electronic book are displayed in the right part of the screen, in the present embodiment, it is also possible to display a list of the counting result of depression of the "wish to read"/"have read" button. This will be specifically described below with reference to FIG. 10.

FIG. 10 is a diagram illustrating an example of screen displaying a counting result of users who depress the "wish to read" button. The screen illustrated in FIG. 10 is, for example, a screen to which the screen transits when an item 513 of "communication" included in the display region 51 of communication illustrated in FIG. 6 is depressed.

As illustrated in FIG. 10, in the list display screen 45 of the counting result of depression of the "wish to read" button, images of covers of electronic books are displayed in descending order of the number of users who depress the "wish to read" button 33. It should be noted that, also in the list display screen 45, the "wish to read" button 33 and the "have read" button 34 are displayed in association with each electronic book. Further, as illustrated in FIG. 10, it is possible to distinguish between depressed and not depressed by, for example, color displaying a "wish to read" button 33x and a "have read" button 34x which are depressed by the user and gray-outing a "wish to read" button 33y and a "have read" button 34y which are not depressed by the user.

Further, in the right part of the screen illustrated in FIG. 10, a display screen 47 of the counting result of depression of the "have read" button is also displayed. In the display screen 47, images of covers of electronic books are displayed in descending order of the number of users who depress the "have read" button 34.

As described above, in the present embodiment, the counting result of depression of the "wish to read" button/"have read" button is displayed according to ranking, and the user can find a new electronic book which the user does not know. Further, because the number of users who actually depress the "wish to read" button/"have read" button is displayed together as well as an average value of assessment, a review and ranking, the user can recognize how many people are actually interested in each electronic book.

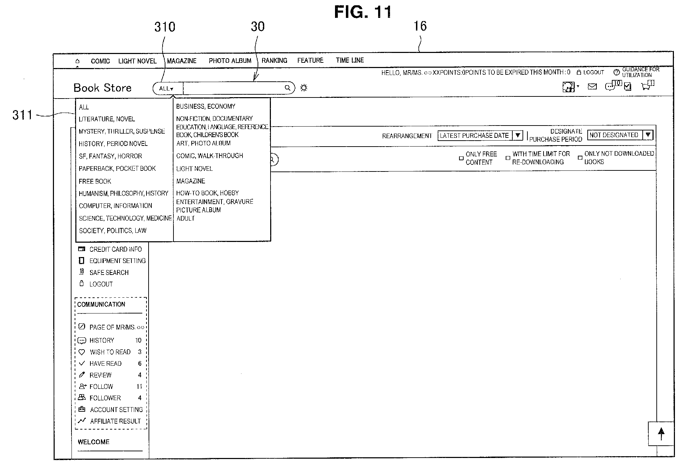

The example of the display screen of the communication information to be shared with other users, such as, for example, the counting result of the number of users who depress the "wish to read"/"have read" button, the set tag, or the like, have been described above as the example of the screen display relating to the communication information. Subsequently, an example of screen display relating to search of an electronic book according to the present embodiment will be described with reference to FIG 11 to FIG 16.

### <3-2. Screen Display Example Relating to Search>

### (3-2-1. Genre Setting)

FIG. 11 is a diagram for explaining setting of a genre of an electronic book to be searched. As illustrated in FIG. 11, when a genre setting field 310 included in the search bar 30 is depressed, genre menu display 311 is pulled down and displayed. The user selects an arbitrary genre from the genre menu display 311. Further, when "all" is selected in the genre menu, all the genres are set as a search target.

As described above, because the search bar 30 according to the present embodiment includes the genre setting field 310, the user can readily change setting of the genre with very little effort and labor.

### (3-2-2. Setting of Other Conditions)

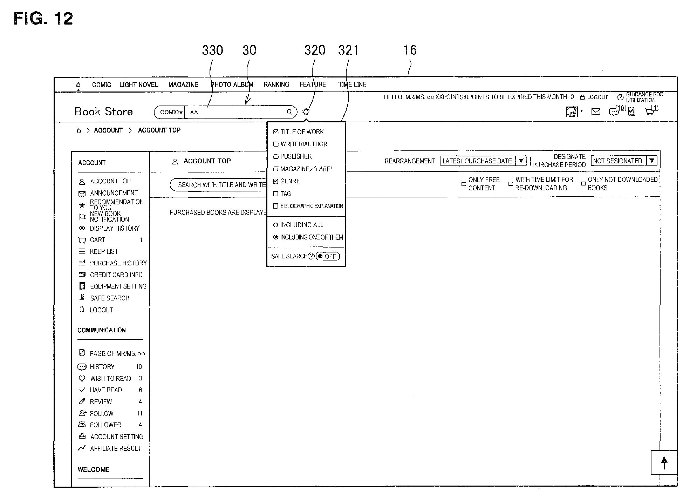

In the search of an electronic book according to the present embodiment, it is possible to arbitrarily select a title of a work, a writer/author, a publisher, magazine/label which carries the work, a tag, or the like, as well as a genre to refine search. This will be described below with reference to FIG. 12.

FIG. 12 is a diagram for explaining setting of conditions for search refinement according to the present embodiment. As illustrated in FIG. 12, when a gear 320 included in the search bar 30 is depressed, condition menu display 321 for search refinement is pulled down and displayed. For example, when the "title of work" is set as conditions for search refinement, an electronic book including a keyword inputted in a keyword input field 330 in a title of a work is searched. Further, when the "tag" is set as conditions for search refinement, an electronic book including a keyword in a tag which is arbitrary set to an electronic book by each user (see FIG. 8) is searched. It should be noted that it is possible to set a plurality of search refinement conditions. Further, in "safe search" included in the search refinement condition menu display 321, it is possible to perform setting to exclude inappropriate content such as adult-oriented content from the search result.

As described above, it is possible to execute search with higher accuracy by setting conditions for search refinement and limiting items to be searched.

### (3-2-3. Search Result Screen)

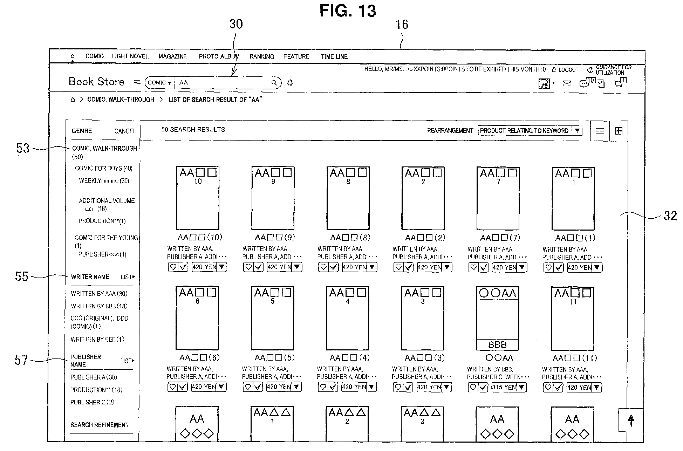

FIG. 13 is a diagram illustrating one example of a search result screen according to the present embodiment. In the example illustrated in FIG. 13, the search result screen in the case where "comic, walk-through" is set as the search genre, "AA" is inputted as a keyword, and the "title of work" is set as conditions for search refinement in the search bar 30 is illustrated. In this case, the search unit 240 of the server 2 according to the present embodiment searches an electronic book including "AA" in the title of the work among the genre of the "comic, walk-through".

As illustrated in FIG. 13, the search result is displayed in the display region 32. In the display region 32, images of covers of searched electronic books, information of the electronic books (such as a title of a work, a writer and a publisher), and the "wish to read"/"have read" buttons are displayed along with the number of search results (in FIG. 13, "50" is displayed as one example).

Further, as illustrated in FIG. 13, in the left part in the search result screen, detail information of the search result is displayed. The detail information of the search result is the number of hits for each detailed genre, the number of hits for each writer, the number of hits for each publisher, or the like.

More specifically, for example, as illustrated in FIG. 13, it is indicated in the genre detail information display field 53 that there are 49 hits of "comic for boys" which is a detailed genre of "comic, walk-through", and there is one hit of "comic for the young" among 50 search results. Further, the number of hits for each magazine which carries the work, which is a further detailed genre, is also indicated among 49 hits of the "comic for boys".

Further, as illustrated in FIG. 13, in a writer display field 55, it is indicated that there are 30 hits of "written by AAA"", there are 18 hits of "written by BBB", there is one hit of "CCC (original), DDD (comic)", and there is one hit of "written by EEE" among 50 search results.

Further, as illustrated in FIG. 13, in a publisher display field 57, it is indicated that there are 30 hits of "publisher A", there are 18 hits of "production **" and there are two hits of "publisher C" among 50 search results.

### (3-2-4. Predictive Search)

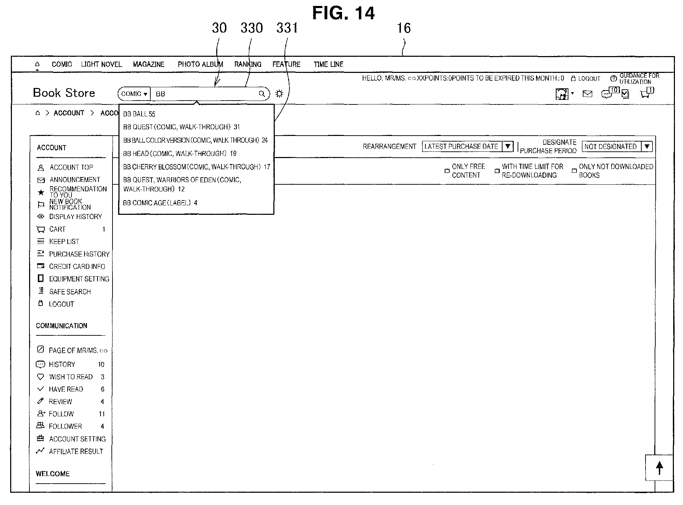

FIG. 14 is a diagram for explaining a predictive search result according to the present embodiment. As illustrated in FIG. 14, when a keyword "BB" is inputted in the keyword input field 330 of the search bar 30, a predictive search result 331 is displayed. Predictive search is performed by the search unit 240 of the server 2.

Here, in the predictive search result 331 according to the present embodiment, keywords predicted based on the inputted keyword (keywords including the inputted keyword) are displayed according to ranking based on a score of the number of times of search.

Further, in the predictive search result 331, a score of the number of times of search and a database (DB) item are displayed along with the predicted keywords. More specifically, for example, when a predicted keyword "BB quest" including the keyword "BB" is displayed as the predictive search result, as illustrated in FIG. 14, a score "31" of the number of times of search of "BB quest", and a DB item of "comic, walk-through" of "BB quest" are displayed. It should be noted that, here, because "BB quest" is a title of a work, an item of a genre into which the electronic book is classified is displayed as the DB item.

Further, when a predicted keyword "BB comic age" is displayed as the predictive search result, as illustrated in FIG. 14, a score "4" of the number of times of search of "BB comic age", and a DB item of "label" of "BB comic age" are displayed. It should be noted that, here, because "BB comic age" is a name of the label, "label" is displayed as the DB item.

In a similar manner, when a predicted keyword is a writer name, the "writer" is displayed as the DB item, while when a predicted keyword is a publisher name, the "publisher" is displayed as the DB item.

As described above, in the present embodiment, a score of the number of times of search of each predicted keyword and a DB item (what name is the predicted keyword) to which the predicted keyword corresponds are displayed as the predictive search result along with the predicted keywords based on the inputted keyword. By this means, the user can select a desired predicted keyword as a search keyword with very little effort of only inputting a part of the keyword. Further, because a DB item of the predicted keyword is displayed and the predicted keyword is selected while the DB item is also taken into account, the user can readily narrow down the search conditions.

### (3-2-5. Tag Search)

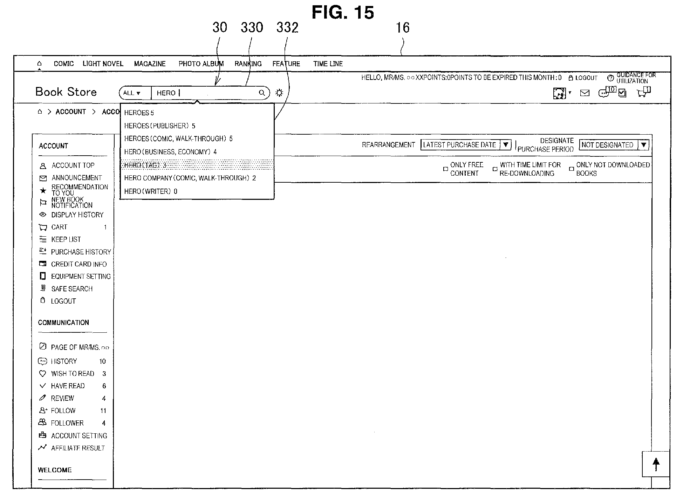

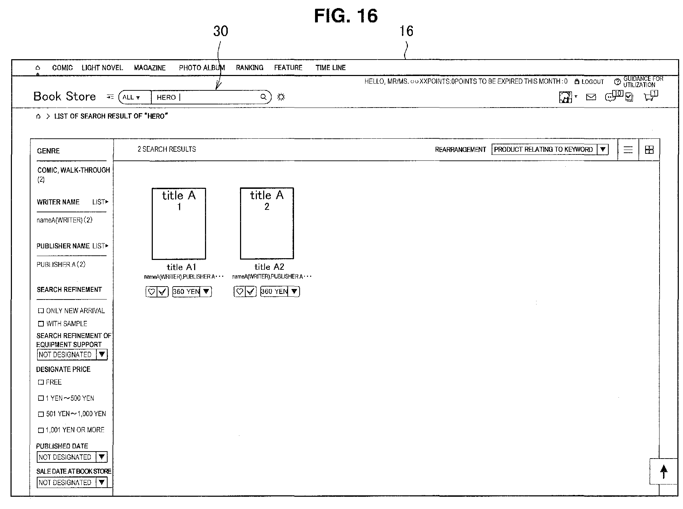

Subsequently, tag search according to the present embodiment will be described with reference to FIG. 15 and FIG. 16. As described above with reference to FIG. 8, in the present embodiment, each user can arbitrarily set a tag to an electronic book. The set tag is stored in the product information DB 24 of the server 2 in association with each electronic book (see FIG. 4).

FIG. 15 is a diagram for explaining a case where tag search is performed from the predictive search result according to the present embodiment. As illustrated in FIG. 15, when "hero" is inputted to the keyword input field 330 of the search bar 30, predicted keywords such as "heroes", "hero" and "hero company" are displayed in the predictive search result 332.

Further, each predicted keyword is displayed along with a score of the number of times of search and a DB item.

For example, when the predicted keyword "heroes" is a publisher name, "publisher" is displayed as the DB item. Further, when the predicted keyword "heroes" is a title of a work, the genre of the work of "comic, walk-through" is displayed as the DB item. By this means, the user can perform search while narrowing down search to electronic books whose publisher is "heroes" or electronic books whose title of a work is "heroes".

Further, as illustrated in FIG. 15, when the predicted keyword "hero" is a tag, the "tag" is displayed as the DB item. The user can designate search narrowed down to electronic books tagged with "hero" by selecting the predicted keyword.

FIG. 16 is a diagram illustrating one example of a tag search screen according to the present embodiment. The screen illustrated in FIG. 16 is one example of a screen to which the screen transits when "hero (tag) 3" is selected in the screen illustrated in FIG. 15. When "hero (tag) 3" is selected, search narrowed down to electronic books tagged with "hero" is performed, and electronic books tagged with "hero" are displayed as a search result.

As described above, in the search according to the present embodiment, it is possible to perform search using a tag which is one example of the communication information arbitrarily set by each user and to be shared with other users in addition to a genre of the work, a writer name, a publisher name, a title of a work, magazine/label which carries the work and bibliographic explanation.

### «4. Conclusion»

As described above, the information processing system according to the embodiment of the present disclosure can present the number of users who are interested in a product (one example of communication information) on an e-commerce transaction screen. Specifically, for example, the user can recognize the number of users who wish to read a target electronic book and the number of users who have read the target electronic book in real time in a Web store for electronic books, and can share the number of users who are interested in the electronic book with other users.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, while the information processing system according to the above-described embodiment is configured with user terminals 1 and a server 2 and reduces processing load of the user terminal 1 by making the server 2 side perform main processing such as counting processing and search processing, the present embodiment is not limited to this. For example, at least one of the above-described counting processing and the search processing may be performed at the user terminal 1 side.

Further, it is also possible to create a computer program for causing a hardware such as a CPU, a ROM and a RAM incorporated into the above-described user terminal 1 or the server 2 to exert a function of the user terminal 1 or the server 2. Further, a computer-readable storage medium in which the computer program is stored is also provided.

In addition, the effects described in the present specification are merely illustrative and demonstrative, and not limitative. In other words, the technology according to the present disclosure can exhibit other effects that are evident to those skilled in the art along with or instead of the effects based on the present specification.

Additionally, the present technology may also be configured as below.
(1) An information processing apparatus including:
   a counting unit configured to count the number of users who are interested in a product dealt in e-commerce transaction performed via a network; and
   a control unit configured to perform control in a manner that a counting result by the counting unit is presented on a screen of the e-commerce transaction along with information of the product.
(2) The information processing apparatus according to (1),
   wherein the number of users who are interested in the product is at least one of the number of users who desire the product and the number of users who have experienced the product.
(3) The information processing apparatus according to (1) or (2),
   wherein the control unit performs control in a manner that at least one of a button indicating that one wishes to read an electronic book and a button indicating that one has read the electronic book is displayed on the screen of the e-commerce transaction along with information of the electronic book.

### Reference Signs List

- 1: user terminal
- 10: control unit
- 12: communication unit
- 14: operation inputting unit
- 16: display unit
- 18: storage unit
- 2: server
- 20: control unit
- 210: counting unit
- 220: screen generating unit
- 230: screen display control unit
- 240: search unit
- 22: communication unit
- 24: product information DB
- 26: communication information DB

## Claims

1. An information processing apparatus comprising:
a counting unit configured to count the number of users who are interested in a product dealt in e-commerce transaction performed via a network; and
a control unit configured to perform control in a manner that a counting result by the counting unit is presented on a screen of the e-commerce transaction along with information of the product.

2. The information processing apparatus according to claim 1,
wherein the number of users who are interested in the product is at least one of the number of users who desire the product and the number of users who have experienced the product.

3. The information processing apparatus according to claim 1,
wherein the control unit performs control in a manner that at least one of a button indicating that one wishes to read an electronic book and a button indicating that one has read the electronic book is displayed on the screen of the e-commerce transaction along with information of the electronic book.
